Europäisches Patentamt

European Patent Office

Office européen des brevets

(11) Publication number: **0 245 041 B1**

## EUROPEAN PATENT SPECIFICATION

(45) Date of publication of patent specification: **08.07.92** (51) Int. Cl.⁵: **G06F 15/20**

(21) Application number: **87303921.8**

(22) Date of filing: **30.04.87**

(54) **Text processing apparatus for processing text in accordance with different selected text formats.**

(30) Priority: **05.05.86 US 859600**

(43) Date of publication of application:
**11.11.87 Bulletin 87/46**

(45) Publication of the grant of the patent:
**08.07.92 Bulletin 92/28**

(84) Designated Contracting States:
**DE FR GB IT**

(56) References cited:
**EP-A- 0 119 395**

**IBM TECHNICAL DISCLOSURE BULLETIN, vol. 25, no. 2, July 1982, pages 684-689, New York, US; D.M. HOWELL et al.: "Temporary function retention"**

**IBM TECHNICAL DISCLOSURE BULLETIN, vol. 26, no. 4, September 1983, pages 1779-1780, New York, US; W.A. KUECKER et al.: "Carry-over-format bypass"**

(73) Proprietor: **International Business Machines Corporation**
**Old Orchard Road**
**Armonk, N.Y. 10504(US)**

(72) Inventor: **Pascoe, Robert August**
**10405 Spicewood Mesa**
**Austin Texas 78759(US)**

(74) Representative: **Atchley, Martin John Waldegrave et al**
**IBM United Kingdom Limited Intellectual Property Department Hursley Park**
**Winchester Hampshire SO21 2JN(GB)**

## Description

This invention relates to text processing apparatus which provides for the processing of text in accordance with different selected text formats.

In text processing apparatus which receives text data and text processing instructions, the format of the text to be used for processing is often controlled by formatting directives embedded in the text data stream. In prior art text processing apparatus, once these formatting directives have been specified they are effective until they are changed by other directives. Such apparatus does not retain any history. As soon as one of the formatting directives has been executed to change the value of a parameter of a text format, the previous value of that parameter, before modification, is forgotten by the apparatus. Thus, in such apparatus, format changes become very restrictive because of the necessity of documenting the current values of the format parameters before they are changed temporarily, for those cases in which it is desired to return to the current format at a later stage in the text processing operation.

For example, a text application may process a long quotation by indenting the left and right margins of the text of the quotation, by changing the type font, and by changing the line spacing (for example from a double spacing to single spacing) for the indented quotation text. The original margin values, type font choice, and line spacing are to be restored when the processing of the quotation text has been completed. In a modal system, such as that described above, when the quotation text has been formatted (when formatting directives are used to change the margin values and line spacing, and to change the type font as required), the values of the original margins and the line spacing, and choice of type font are lost to the process. When processing of the the quotation text has been completed, the operator must reestablish the original margins and line spacing values, and type font by keying new formatting directives. This assumes that the operator knew the value of the original margins, line spacing and type font face being used before the temporary format change took place. In some applications this may be true, but in less structured applications the operator may be keying text which will be formatted to a specific margin, line spacing, and type font at a later time. Thus, all the operator knows at the time of keying is that the margins are to be shifted in, the line spacing is to be changed, and the type font is to be changed (to italic for example) for the quotation, and further, that the current (but not necessarily original) format parameters are to be restored at the completion of the processing of the quotation text.

Therefore, in this less structured case, the final formatting of the text is linked to the final destination of the text data. If this final destination is not known at the time of the keying of the text, the formatting directives associated with the text cannot be input with the text data, and the text will have to be edited for each subsequent change of format. It is certainly desirable to format all of the text at the time it is keyed, thus eliminating the need to edit the text when it is being formatted into its final form.

In the prior art, attempts have been made to surmount these problems by providing a master format buffer which stores a set of formatting states for a document. This technique has been expanded to include a second, alternative format buffer which stores an alternative set of formatting states of a document, as is the case with the IBM Personal Computer (Trade Mark) DisplayWrite 3 word processing program. In view of this, additional alternative format buffers are possible, but each of these master and alternative format buffers stores a highly and extensively structured set of data which requires a significant storage overhead since the value of each formatting parameter is stored regardless of its equality with the values of the same formatting parameter in the other stored formats. Some portions, or all, of these stored formats can be reestablished, after a formatting change, through formatting directives provided by the architecture. However, this does not solve the problem of returning to the formatting values in effect immediately before a formatting change, because a return to the master or alternative format is a return to a formatting state established at the beginning of the document.

EP-A-0 119 395 relates to a text processing and displaying system in which text can be displayed using a selected one of a plurality of different fonts and describes a way of defining different fonts by using special code words for each font. It does not describe storing certain parameters of a current format which is no longer being used but is replaced by an alternative format so that it can easily be recalled when it is needed at a later stage in the processing operation, in particular only those parameters or features of the current format which differ from those of the alternative format.

IBM Technical Disclosure Bulletin, Volume 25, No. 2, July 1982, pages 684-689 relates to a text processing and display system in which certain features of a current format are retained when an alternative format is to be used and describes in particular retaining features of the current format such as "indent tab", "temporary left margin", "temporary right margin" etc. It does not describe storing certain parameters of the current format which is no longer being used so that it can easily be recalled when it is needed at a later stage in the processing operation, in particular only those parameters or features of the current format which differ from those of the alternative format.

It would significantly reduce both storage overhead for storing formatting parameter values and operator time in making formatting changes if a technique for temporary formatting changes was available which allowed a return to a previous format without having to remember anything about the values of that previous format.

The object of the present invention is to provide improved text processing apparatus which can process text in accordance with different selected text formats.

The present invention relates to text processing apparatus of the type which comprises means for receiving text to be processed, processing means for processing received text in accordance with a selected text format, and a control system for changing the selected format on receipt of a format change instruction.

According to the invention the text processing apparatus is characterised in that the control system comprises text format change means including means for detecting a text format change instruction to change from a current text format to an alternative text format, means responsive to the detection of the text format change instruction for comparing the parameters of the current text format with the parameters of the alternative text format so as to detect parameters of the current text format which differ from the corresponding parameters in the alternative text format, and means for changing the operation of the processing means so that it processes text in accordance with the alternative text format, storage means for storing the parameters of the current text format which differ from the corresponding parameters of the alternative text format, and text format change back means including means for detecting a text format change back instruction to change back from the alternative text format to the current text format, and means responsive to the detection of the text format change back instruction for utilising the stored parameters to change the operation of the processing means so that it processes received text in accordance with the current text format.

Text processing apparatus in accordance with the invention provides the capability for compactly storing directives for temporary format changes within text data. Only the current format parameters affected by the temporary format changing directives are processed and stored, which relieves the apparatus from having to consider all of the other format parameters which are to remain unchanged.

When temporary format changing directives are specified, the current values of the format parameters to be changed are stored, which enables their immediate and automatic retrieval and return when the need for the temporary format change has passed.

This may be accomplished by the use of the following three new control instructions within the text data stream: (a) a Begin Temporary Format Change control instruction, (b) an End Temporary Format Change control instruction, and (c) a Return to Previous Format control instruction. The first two of these control instructions are used to delimit the format change which is to take place and to identify that the format change defined in the portion of the data stream located between this pair of control instructions is to be considered temporary so that the value of the format parameters to be changed are to be remembered. The Return to Previous Format control instruction is used to signify that the temporary format change is over and that the original format parameters, whose values have been stored in accordance with the Begin/End Temporary Format Change control instructions, are to be restored.

The Begin Temporary Format Change control instruction contains a parameter termed: Temporary Format Identifier (ID). Execution of the Begin Temporary Format Change control instruction will cause storage space to be reserved for each of the format parameter values which is to be remembered, and an ID is assigned to that storage space. Next, the formatting directives following the Begin Temporary Format Change control instruction, but preceding the End Temporary Format Change control instruction, are examined to determine which format parameters are to be changed. The values of the current format parameters which are to be changed in accordance with the control instructions between the Begin Temporary Format Change and End Temporary Format Change control instructions are saved in the storage area reserved by the Begin Temporary Format Change control instructions. Following storage of the current format parameter values, the formatting directives located between the Begin/End Temporary Format Change pair of control instructions are executed, causing the new format parameter values to be implemented. The End Temporary Format Change control instruction has no parameters, its only function being to delimit the end of the collection of formatting directives which are to be activated temporarily.

The Return to Previous Format control instruction has three parameters: Condition, Value, and Temporary Format ID. The Condition parameter, coupled with the Value parameter, indicates when the control instruction is to be executed. For example, the Condition parameter may specify that the return to the previous format is to occur at the end of the current line of text, after ten lines of text have been presented, or after four inches of vertical distance have been occupied by succeeding, formatted text. Execution of the control instruction may be immediate, relative, or absolute, as described in more detail below. The Temporary Format ID parameter indicates which of the stored text formats is to be restored when the Return to Previous Format control instruction is executed.

In order that the invention may be more readily understood an embodiment will now be described with reference to the accompanying drawings, in which:

Fig. 1 is a flow chart which illustrates the different alternative format change control operations which can be performed by the apparatus illustrated in Figure 8,

Fig. 2 is a flow chart which shows the operation of changing a text format in accordance with the Begin/End Temporary Format Change control instructions using the apparatus of Figure 8,

Figs. 3 and 4 are flow charts which describe the format changing operations performed in accordance with the detection of a Return to Previous Format control instruction by the apparatus of Figure 8,

Figs. 5-7 are text and graphics examples which show the use of the format changing process performed by the apparatus of Figure 8, and

Fig. 8 is a block diagram of text processing apparatus including text format changing units in accordance with the present invention.

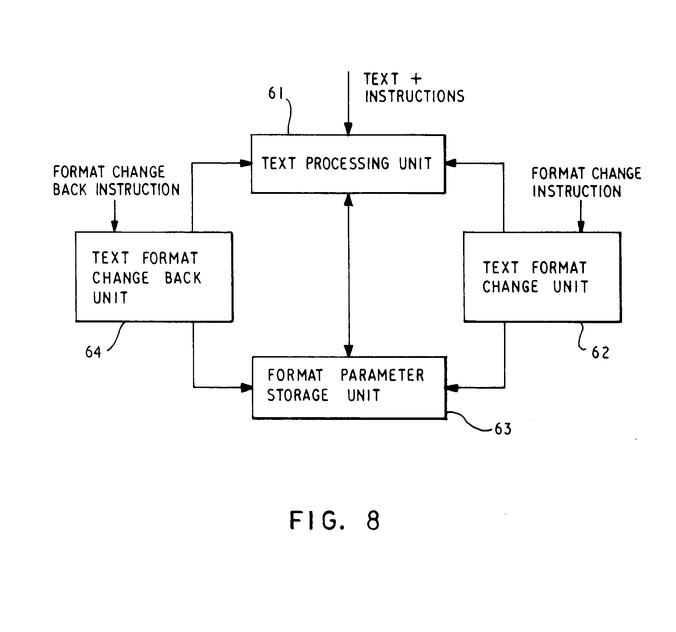

Referring to Fig. 8, text processing apparatus in accordance with the invention includes a text processing unit 61 for processing received text data in accordance with a selected text format. The format being used at any instant is defined as the current text format. The apparatus also includes a control system including a text format change unit 62 which is responsive to the receipt of a format change instruction to generate control instructions for use in changing the text format used by the processing unit 61 from the current text format to an alternative text format. The apparatus further includes a format parameter storage unit 63 used to store selected parameters of the current text format.

The apparatus still further includes a text format change back unit 64 which is responsive to the receipt of a format change back instruction, to use the text format parameters stored in the storage unit 63 to generate control instructions to change the operation of the processing unit 61 to change the text format used by the processing unit 61 so that it once again processes text in accordance with the current text format.

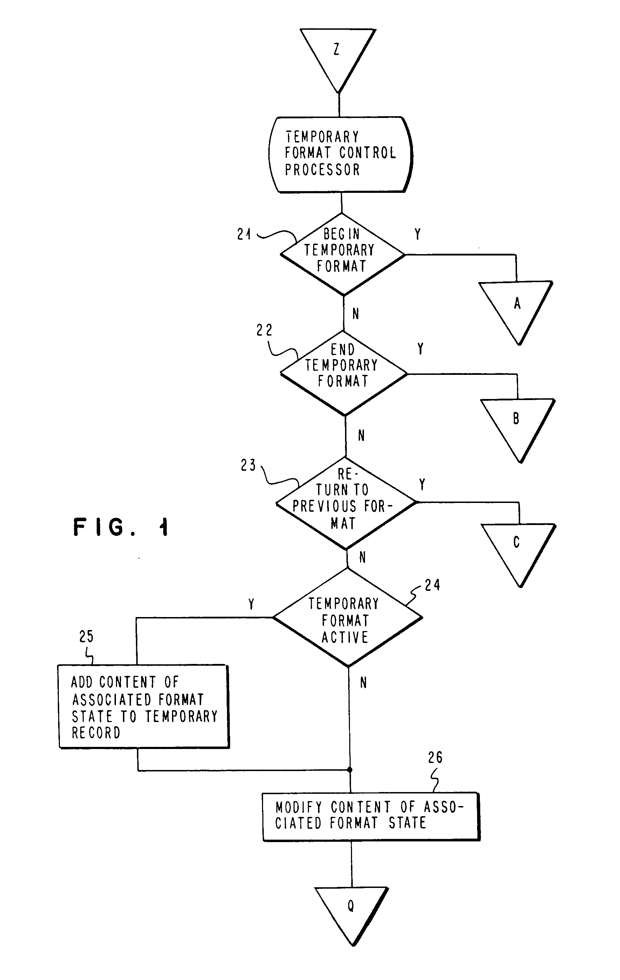

Referring to the flow chart of Fig. 1 the routine denoted "Z" used to change the text format being used is integrated with the processing of a data stream by the apparatus of Fig. 8. It is important to note that, while at the present time the vast majority of text editing processes are implemented by the programming of some type of data processing system, these processes may alternatively be accomplished by the appropriate logical circuit configuration of dedicated, hardware logical elements as illustrated in Fig. 8.

The routine "Z" in Fig. 1 begins at a point in the text processing operation between the entry of text data via a keyboard or other input means and the collective memory storage of this data in, for example, a traditional text data storage buffer. This process may also be used in instances in which a previously generated text data stream is to be formatted for presentation purposes, such as for displaying or printing. The flow chart shown in Fig. 1 examines the input data stream for certain control instructions and causes appropriate branching to additional routines upon the occurrence of these controls instructions.

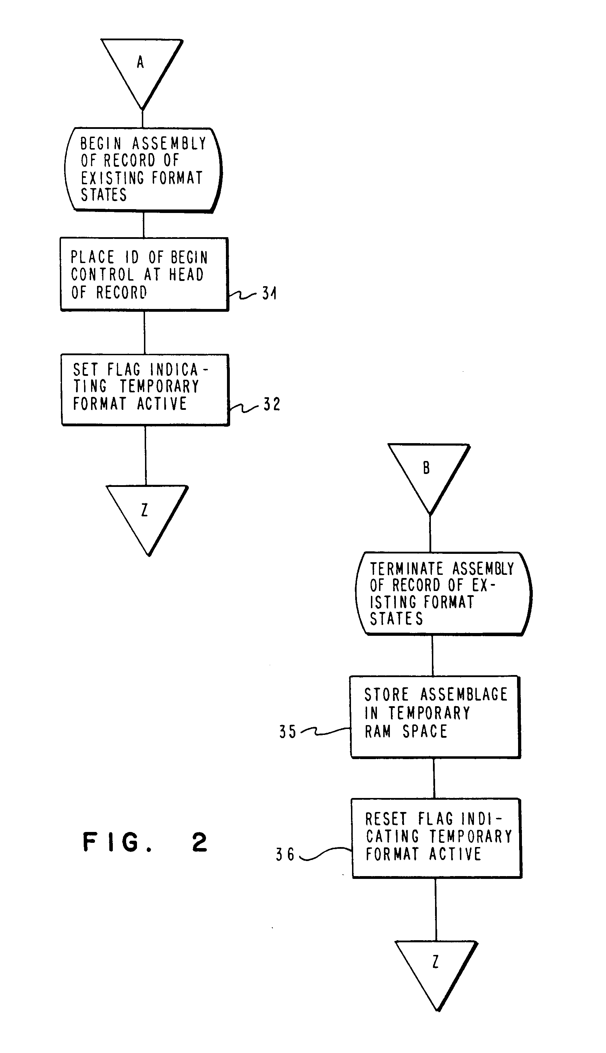

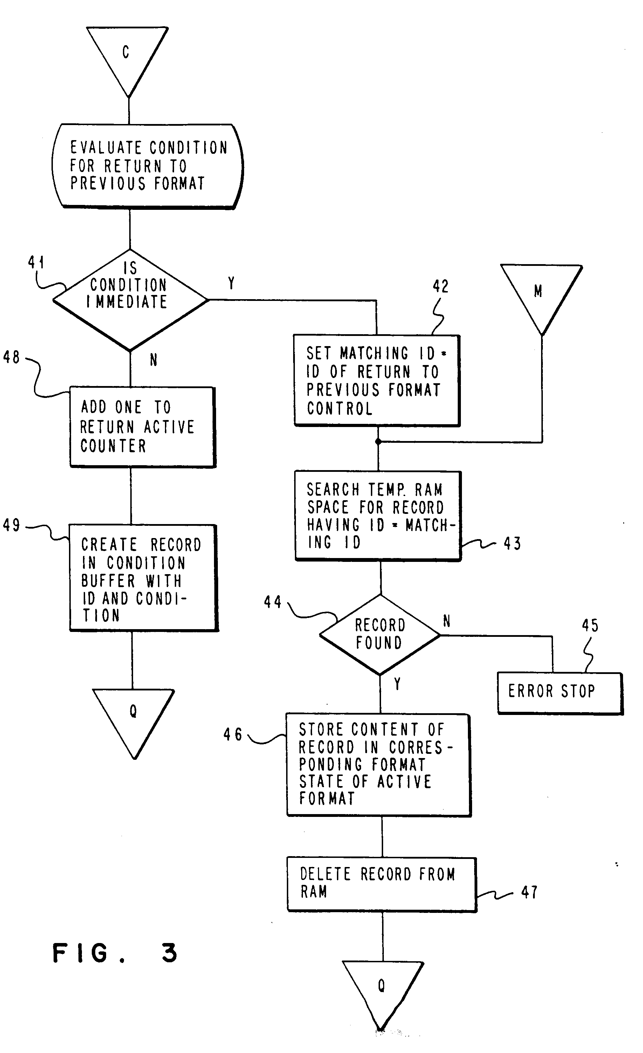

Referring again to Fig. 1, at block 21 a control instruction in the input data stream is tested to determine if it is a Begin Temporary Format Change control instruction. If so, the operation branches to "A" which is shown in the flow chart of Fig. 2. If not, the control instruction is tested at block 22 to determine if it is an End Temporary Format Change control instruction. If so, the operation branches to "B", see Fig. 2. If not, the operation continues to block 23 at which point the control instruction is tested to determine if it is a Return to Previous Format control instruction. If so, the operation branches to "C", see Fig. 3. If not, the operation proceeds to block 24 where a test is performed to determine whether a Temporary Format is active, as will be described below. Thereafter, or in the event that a Temporary Format is not active, the operation proceeds to 26 to allow a formatting directive to modify the content of the associated format state.

Assume now that a Begin Temporary Format control instruction is detected in the data stream at block 21. In this case the operation branches to block 31 of the flow chart in Fig. 2. At this stage the assembly of a record is begun. This record will consist of the existing values of the format parameters in the current format which will be altered by the format changes specified by the instructions which are found between the Begin Temporary Format Change control instruction and the End Temporary Format Change control instruction. It is important to note that only the values of the format parameters of the current text format which are to be temporarily changed will be stored in this record.

This assembled record of format parameter values is stored in an allocated portion (63 Fig. 8) of a random access memory, ordinarily separated from the data stream itself. In assembling this record of format parameter values at block 31, an identifier ID, specified in the Begin Temporary Format Change control instruction, is placed at the beginning of the record which is being assembled. Thereafter, at block 32 a flag is set to indicate that a temporary format record assembly operation is in progress (Temporary Format Active). The set condition of this flag determines the path taken from block 24, Fig. 1. That is, if this flag is set, as detected at block 24 in Fig. 1, a Temporary Format operation is active. After this flag is set the operation returns to "Z" at the beginning of Fig. 1 for processing of succeeding instructions in the data stream.

Following the processing of the Begin Temporary Format Change control instruction as described above, assume that the next instruction encountered is the value of a format parameter to be changed. Depending on the system implementation, this value may be, for example, "left margin plus five units", which is a relative value, or the value may be "left margin equals 20" which is an absolute value. In either case, this format parameter value represents none of the control instructions tested for at blocks 21, 22, and 23. However, since the flag indicating that Temporary Format operation is active was set at block 32 in Fig. 2, the path through block 25 in Fig. 1 is taken. Therefore, the current margin value, before the Temporary Format change operation, is included with the content of the record identified by the ID of the Begin Temporary Format Change control instruction which has begun to be assembled at block 31, Fig. 2. Thereafter, the value of the format parameter of the text format to be used is then modified at block 26, Fig 1, to reflect the new, temporary, left margin.

Additional format parameter value changes may be specified in the succeeding instructions that are tested at blocks 21 - 23. While the Temporary Format change operation is active, block 24 causes the data flow path to include block 25 which causes the storage of the current values of any temporary format parameter changes to be added to the record identified by the ID of the Begin Temporary Format Change control instruction that preceded these temporary format parameter changes. Then, at block 26 the associated format state to be used for processing is modified to reflect the new value related to the specified format parameter.

After all of the new values for specified format parameters to be changed have been processed as described above, an End Temporary Format Change control instruction is detected at block 22 which causes the operation to branch to "B" in Fig. 2. At this point the assembly of the record containing the current format parameter values that are being temporarily changed is terminated at block 35. This record containing the values of the format parameters for the text format being used (before they were temporarily changed) is stored in a random access memory of the apparatus, separate from the storage of the text data stream.

The operation then proceeds to block 36 where the flag indicating that a Temporary Format operation is active is now reset. This means, in Fig. 1, block 24, that any subsequent format changes are treated as permanent format changes. The parameters of the associated format state will be modified, as per block 26, Fig. 1, but the values of those format parameters which exist immediately prior to this permanent change are not stored for later recall.

Accordingly, the format changes specified after receipt of a Begin Temporary Format Change control instruction and before receipt of an End Temporary Format Change control instruction are processed as temporary format changes with the assumption that a Return to the Previous Format control instruction will be subsequently issued. To accommodate this request the values of the format parameters which existed immediately prior to the processing of these temporary format changes are stored together, with the identifier ID, for convenient recall.

A succession of text, graphics, or other instructions are then processed after the one or more temporary format changes, described above, have been processed. The process described in the flow chart of Fig. 1 does not respond to these instructions. Eventually, it will be desired to return to the previous text format which existed before these format changes were made. A Return to Previous Format control instruction in the data stream is detected at block 23, Fig. 1, and causes the operation to branch to the process which begins at Fig. 3.

A Return to Previous Format control instruction may be specified to be either Immediate or Conditional. Thus, at block 41 in Fig. 3, if the Return to Previous Format control instruction is Immediate the operation proceeds to block 42. The Return to Previous Format control instruction must specify an identification of the previous format to be reinstated. Assume now that the identification established at block 31, Fig. 2, for the format changes described above was "1". Assume further, that the Return to Previous Format control instruction presently being processed specifies "1" as the identification of the format to be reinstated.

Accordingly, at block 42, Fig. 3, a "Matching ID" register is loaded with a "1" which is the identification defined by the the Return to Previous Format control instruction. At 43 the random access memory space, where the records are stored which contain the format parameter values before the temporary format changes took place, is searched to locate the record with an identification of "1". If no record is found, the process is stopped because of the error of specifying the return to a format which has not previously been defined. Assuming that the record is found at block 44, the operation proceeds to block 46 where the contents of this record are used to reinstate the values of the format parameters which were altered by the earlier temporary format change associated with the ID of "1". Thereafter, at block 47 the record of these preexisting format parameter values is deleted from the random access memory.

Referring again to block 41, Fig. 3, assume that a Future condition is specified with the Return to Previous Format control instruction. In this case, the condition is not Immediate and, at block 48, a Return Active counter is incremented by one. Then, at block 49, a record is created which contains the identifier of the previous format to which the return is requested and the condition on which the instruction is to be executed. This record is then stored in a Condition buffer.

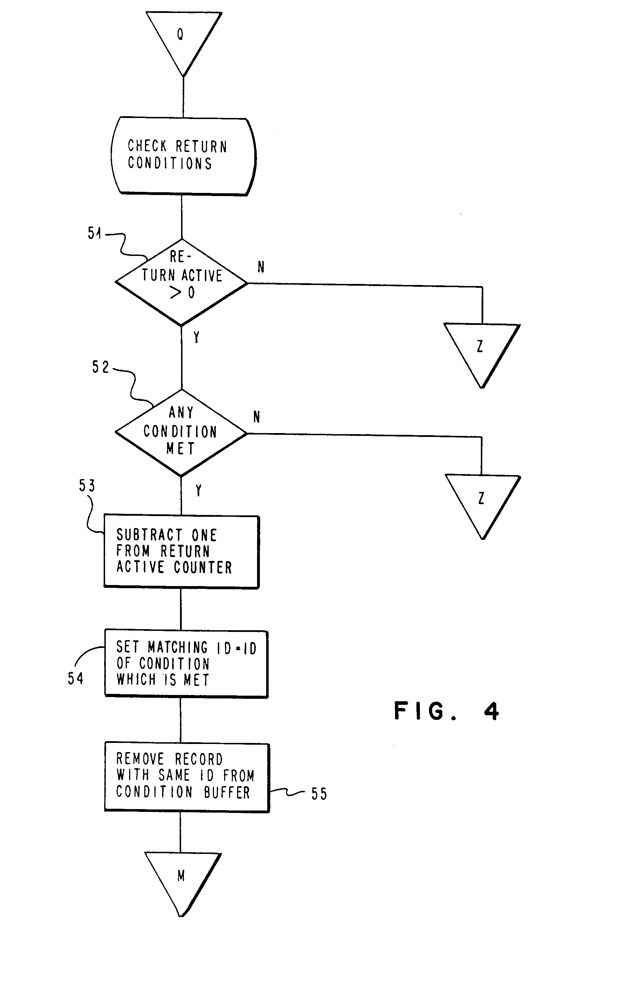

After the processing at either of blocks 47 or 49, Fig. 3, the operation proceeds to "Q" in Fig. 4. At block 51 the Return Active counter is tested to determine if its content is greater than zero. It will be greater than zero if the Return to Previous Format control instruction specified future conditions on which to base a Return to Previous Format control instruction, which future conditions have not been met.

Assume now that at least one such future condition was specified so that the Return Active counter has been incremented at block 48, Fig. 3. Thus, in Fig. 4, at block 51 the operation proceeds to block 52 where each of the conditions stored in the Condition buffer is tested to determine if those conditions compare with a current condition in the text editing process. If a condition stored relative to any of the identifiers in the Condition buffer is met, at block 53 the Return Active counter is decremented by one, and at block 54 the Matching ID register is loaded with the identifier in the Condition buffer associated with the condition which is currently being met. Then, at block 55 this particular record is removed from the Condition buffer and the operation branches back to "M" in Fig. 3 to restore the changed format parameters to their values existing prior to the temporary format changes.

In Fig. 4, at block 52, at each processing cycle of the apparatus, if no condition is met which compares equally with any of the conditions stored in the Condition buffer, the operation proceeds back to "Z" in Fig. 1 to process the next instruction in the data stream. Also, in Fig. 4, at block 51, if the Return Active counter is zero, then there are no stored conditions to be compared with current conditions and the operation proceeds back to "Z".

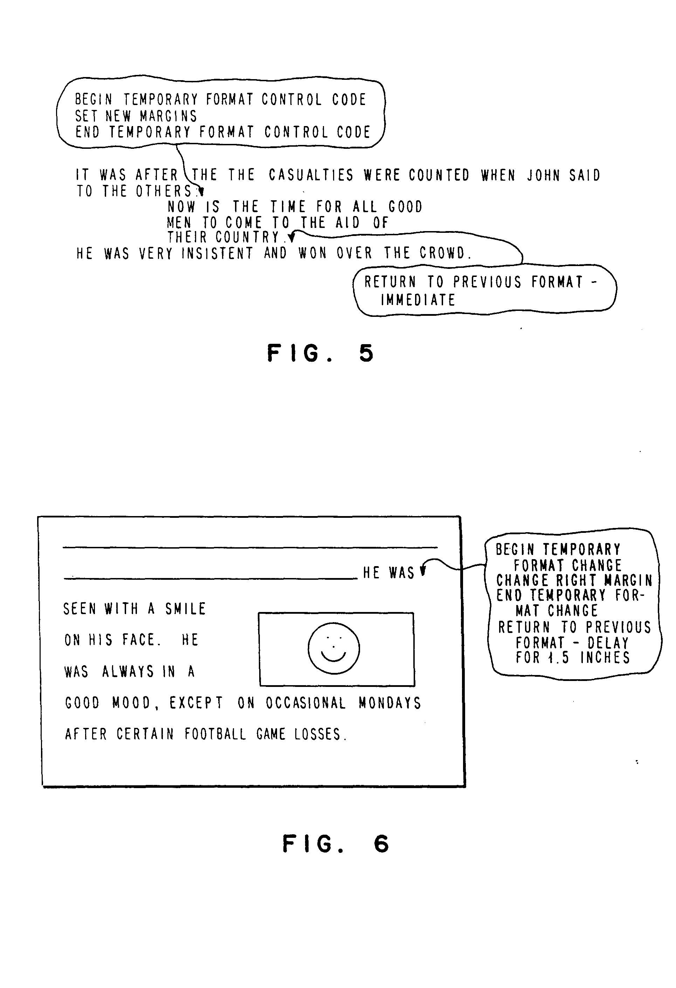

A very efficient and memory conserving process has been described for accommodating temporary format changes for cases in which it is desired to return to a format which existed before those temporary changes were effected. The Return to the Previous Format control instruction can be either Immediate or Conditional. The Immediate return may be used for the example given above of a quotation. The Begin/End Temporary Format Change pair of control instruction would occur in the data stream just prior to the text of a quotation which is to be processed in accordance with a different text format, and the Return to Previous Format control instruction would immediately follow the text of the quotation, as is shown pictorially in Fig. 5.

A delayed Return to Previous Format control instruction may be used in formatting text which is to "run around" a picture or other non-text object. Referring to Fig. 6, the Begin/End Temporary Format Change pair of control instructions is inserted by the operator at the end of the line of text which occurs just prior to the picture. This is followed by the Return to Previous Format control instruction specifying a condition equal to the length of the picture (vertical height) for example 1.5 inches (3.8cms).

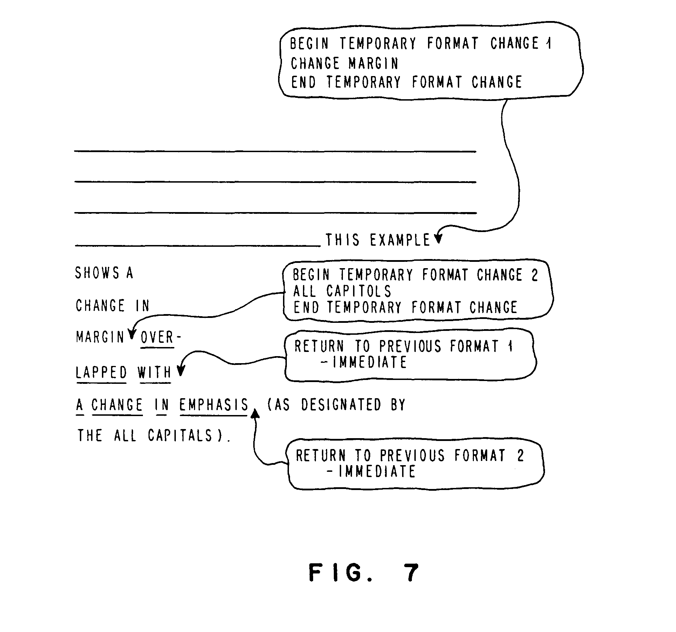

The control instructions are designed such that two or more temporary format changes may be overlapped. Fig. 7 shows a pictorial representation of the use of overlapped temporary format change control instructions. This is accomplished with these control instructions because: (a) only the values of the format parameters affected by the temporary format changes are saved and, therefore, returned to and (b) each temporary format parameter change is stored with an ID so that it can be accessed individually for return.

**Claims**

1. Text processing apparatus comprising
means for receiving text to be processed,
processing means (61) for processing received text in accordance with a selected text format, and
a control system for changing said selected format on receipt of a format change instruction,
characterised in that said control system comprises
text format change means (62) including means for detecting a text format change instruction to change from a current text format to an alternative text format, means responsive to the detection of said text format change instruction for comparing the parameters of said current text format with the parameters of said alternative text format so as to detect parameters of said current text format which differ from the corresponding parameters in said alternative text format, and means for changing the operation of said processing means so that it processes text in accordance with said alternative text format,

storage means (63) for storing said parameters of said current text format which differ from the corresponding parameters of said alternative text format, and

text format change back means (64) including means for detecting a text format change back instruction to change back from said alternative text format to said current text format, and means responsive to the detection of said text format change back instruction for utilising said stored parameters to change the operation of said processing means so that it processes received text in accordance with said current text format.

2. Text processing apparatus as claimed in Claim 1 characterised in that said text format change means (62) comprises means for allocating an identifier to said parameters of said current text format which differ from the corresponding parameters of said alternative text format, and said storage means (63) comprises means for storing said identifier with said parameters.

3. Text processing apparatus as claimed in Claim 2 characterised in that

said storage means comprises means for storing a plurality of sets of parameters each set relating a a different text format and including a respective identifier in response to the detection of a plurality of format change instructions in succession, and

said text format change back means (64) comprises means for detecting a signal in said text format change back instruction corresponding to a selected one of said identifiers, and means responsive to the detection of said signal to change the operation of said processing means so that it processes text in accordance with the text format associated with said identifier.

**Revendications**

1. Appareil de traitement de texte comprenant

des moyens de réception d'un texte à traiter,

des moyens de traitement (61) pour traiter le texte reçu, conformément à un format de texte choisi, et

un système de commande pour changer ledit format choisi, à réception d'une instruction de changement de format,
caractérisé en ce que ledit système de commande comprend

des moyens de changement de format de texte (62) comportant des moyens de détection d'une instruction de changement de format de texte pour passer d'un format de texte en cours à un autre format de texte, des moyens qui répondent à la détection de ladite instruction de changement de format de texte pour comparer les paramètres dudit format de texte en cours avec les paramètres dudit autre format de texte de façon à détecter les paramètres dudit format de texte en cours qui diffèrent des paramètres correspondants dudit autre format de texte, et des moyens de modification du fonctionnement desdits moyens de traitement de sorte qu'ils traitent le texte conformément audit autre format de texte,

des moyens de mémoire (63) pour stocker les dits paramètres dudit format de texte en cours qui diffèrent des paramètres correspondants dudit autre format de texte, et

des moyens de changement inverse de format de texte (64) comportant des moyens de détection d'une instruction de changement inverse de format de texte pour revenir dudit autre format de texte audit format de texte en cours, et des moyens qui répondent à la détection de ladite instruction de changement inverse de format de texte de manière à utiliser lesdits paramètres stockés pour modifier le fonctionnement desdits moyens de traitement de sorte qu'ils traitent le texte reçu conformément audit format de texte en cours.

2. Appareil de traitement de texte suivant la revendication 1, caractérisé en ce que lesdits moyens de changement de format de texte (62) comprennent des moyens d'attribution d'un identificateur auxdits paramètres dudit format de texte en cours qui diffèrent des paramètres correspondants dudit autre format de texte, et lesdits moyens de mémoire (63) comprennent des moyens pour stocker ledit identificateur avec lesdits paramètres.

3. Appareil de traitement de texte suivant la revendication 2, caractérisé en ce que

lesdits moyens de mémoire comprennent des moyens de stockage d'une pluralité de groupes de paramètres, chaque groupe concernant un format de texte différent et comportant un identificateur respectif en réponse à la détection d'une pluralité d'instructions de changement de format en succession, et

lesdits moyens de changement inverse de format de texte (64) comprennent des moyens de détection d'un signal, dans ladite instruction de changement inverse de format de texte, correspondant à un identificateur sélectionné parmi lesdits identificateurs, et des moyens qui répondent à la détection dudit signal pour modifier le fonctionnement desdits moyens de traitement de sorte qu'ils traitent le texte conformément au format de texte associé audit identificateur.

**Patentansprüche**

1. Einrichtung für Textverarbeitung, die folgendes aufweist:
   Mittel zum Empfangen eines Textes, der verarbeitet werden soll,
   ein Verarbeitungsmittel (61) zum Verarbeiten eines empfangenen Textes entsprechend einem ausgewahlte Textformat und
   ein Steuersystem zum Ändern des ausgewählten Formats nach Empfang eines Befehls für eine Formatänderung,
   dadurch gekennzeichnet, daß das Steuersystem folgendes besitzt:
   ein Mittel (62) für eine Textformatänderung, das folgendes aufweist: Mittel zum Erfassen eines Befehls für eine Textformatänderung, um von einem laufenden Textformat zu einem alternativen Textformat zu wechseln, Mittel die auf die Erfassung des Befehls für eine Textformatänderung ansprechen, um die Parameter des laufenden Textformats mit den Parametern des alternativen Textformats zu vergleichen, um Parameter des laufenden Textformats zu erfassen, die sich von den entsprechenden Parametern in dem alternativen Textformat unterscheiden und Mittel zum Ändern des Betriebs des Verarbeitungsmittels so, daß dieses einen Text entsprechend dem alternativen Textformat verarbeitet,
   ein Speichermittel (63) zum Speichern der Parameter des laufenden Textformats, die sich von den entsprechenden Parametern des alternativen Textformats unterscheiden und
   ein Mittel (64) für eine rückläufige Änderung eines Textformats, das folgendes aufweist: Mittel, um einen Befehl für eine rückläufige Änderung eines Textformats zu erfassen, um von dem alternativen Textformat rückläufig zu dem laufenden Textformat zu wechseln, und Mittel, die auf die Erfassung des Befehls für eine rückläufige Änderung eines Textformats zum Verwenden der gespeicherten Parameter ansprechen, um den Betrieb des Verarbeitungsmittels so zu ändern, daß dieses einen empfangenen Text entsprechend dem laufenden Textformat verarbeitet.

2. Einrichtung für Textverarbeitung nach Anspruch 1, dadurch gekennzeichnet, daß das Mittel (63) für eine Textformatänderung Mittel aufweist, um einen Bezeichner den Parametern des laufenden Textformats zuordnen, die sich von den entsprechenden Parametern des alternativen Textformats unterscheiden und das Speichermittel (63) Mittel aufweist, um den Bezeichner mit den Parametern zu speichern.

3. Einrichtung für Textverarbeitung nach Anspruch 2, dadurch gekennzeichnet, daß
   das Speichermittel Mittel zum Speichern einer Mehrzahl von Sätzen von Parametern aufweist, wobei jeder Satz zu einem unterschiedlichen Textformat in Beziehung steht und einen jeweiligen Bezeichner entsprechend der aufeinanderfolgenden Erfassung einer Mehrzahl von Befehlen für eine Formatänderung aufweist und
   das Mittel (64) für eine rückläufige Änderung eines Textformats folgendes aufweist: Mittel, um ein Signal in dem Befehl für eine rückläufige Änderung eines Textformats zu erfassen, der einem ausgewählten der Bezeichner entspricht und Mittel, die auf die Erfassung des Signals ansprechen, um den Betrieb des Verarbeitungsmittels so zu ändern, daß dieses einen Text entsprechend dem Textformat verarbeitet, welches dem Bezeichner zugeordnet ist.

**FIG. 1**

```
                              ┌─────────┐
                               \   Z    /
                                \      /
                                 \    /
                                  \  /
                                   \/

                        ┌─────────────────────┐
                        │ TEMPORARY           │
                        │ FORMAT CONTROL      │
                        │ PROCESSOR           │
                        └─────────────────────┘
                                   │
                                  ◇
                         BEGIN           Y
              21 ────  TEMPORARY  ──────────────┐
                         FORMAT                 │
                                  │            ┌─┴──┐
                                  │ N          \ A  /
                                  │             \  /
                                  ◇              \/
                         END            Y
              22 ────  TEMPORARY  ──────────────┐
                         FORMAT                 │
                                  │            ┌─┴──┐
                                  │ N          \ B  /
                                  │             \  /
                                  ◇              \/
                         RE-            Y
              23 ────  TURN TO    ──────────────┐
                     PREVIOUS FOR-              │
                         MAT                   ┌─┴──┐
                                  │ N          \ C  /
                                  │             \  /
                                  ◇              \/
                       TEMPORARY        24
                Y        FORMAT
         ┌──────────── ACTIVE
         │
 ┌───────┴──────────┐       │ N
 │ ADD CONTENT OF   │       │
 │ ASSOCIATED FORMAT│       │
 │ STATE TO TEMPORARY│      │
 │ RECORD      25   │       │
 └───────┬──────────┘       │
         └──────────────────┤
                            ┌─┴──────────────────┐
                            │ MODIFY CONTENT OF ASSO-│  26
                            │ CIATED FORMAT STATE │
                            └─────────────────────┘
                                   │
                                   ◇ Q
```

A

BEGIN ASSEMBLY
OF RECORD OF
EXISTING FORMAT
STATES

PLACE ID OF BEGIN
CONTROL AT HEAD
OF RECORD ～ 31

SET FLAG INDICA-
TING TEMPORARY
FORMAT ACTIVE ～ 32

Z

B

TERMINATE ASSEMBLY
OF RECORD OF EX-
ISTING FORMAT
STATES

STORE ASSEMBLAGE
IN TEMPORARY
35 ～ RAM SPACE

RESET FLAG INDI-
CATING TEMPORARY
36 ～ FORMAT ACTIVE

Z

**F I G.   2**

FIG. 3

FIG. 4

BEGIN TEMPORARY FORMAT CONTROL CODE
SET NEW MARGINS
END TEMPORARY FORMAT CONTROL CODE

IT WAS AFTER THE THE CASUALTIES WERE COUNTED WHEN JOHN SAID
TO THE OTHERS.
          NOW IS THE TIME FOR ALL GOOD
          MEN TO COME TO THE AID OF
          THEIR COUNTRY.
HE WAS VERY INSISTENT AND WON OVER THE CROWD.

RETURN TO PREVIOUS FORMAT -
  IMMEDIATE

# FIG. 5

                                                      HE WAS

SEEN WITH A SMILE

ON HIS FACE.  HE

WAS ALWAYS IN A

GOOD MOOD, EXCEPT ON OCCASIONAL MONDAYS

AFTER CERTAIN FOOTBALL GAME LOSSES.

BEGIN TEMPORARY
  FORMAT CHANGE
CHANGE RIGHT MARGIN
END TEMPORARY FOR-
  MAT CHANGE
RETURN TO PREVIOUS
  FORMAT - DELAY
  FOR 1.5 INCHES

# FIG. 6

BEGIN TEMPORARY FORMAT CHANGE 1
CHANGE MARGIN
END TEMPORARY FORMAT CHANGE

_____ THIS EXAMPLE

SHOWS A

CHANGE IN

MARGIN OVER-

LAPPED WITH

A CHANGE IN EMPHASIS (AS DESIGNATED BY

THE ALL CAPITALS).

BEGIN TEMPORARY FORMAT CHANGE 2
ALL CAPITOLS
END TEMPORARY FORMAT CHANGE

RETURN TO PREVIOUS FORMAT 1
 - IMMEDIATE

RETURN TO PREVIOUS FORMAT 2
 - IMMEDIATE

F I G.   7

TEXT +
INSTRUCTIONS

61

TEXT PROCESSING UNIT

FORMAT CHANGE
BACK INSTRUCTION

FORMAT CHANGE
INSTRUCTION

TEXT FORMAT
CHANGE BACK
UNIT

TEXT FORMAT
CHANGE UNIT

64

62

FORMAT PARAMETER
STORAGE UNIT

63

FIG. 8